(19) Europäisches Patentamt

European Patent Office

Office européen des brevets

(11) **EP 1 691 546 A1**

(12) **EUROPEAN PATENT APPLICATION**

(43) Date of publication:
**16.08.2006 Bulletin 2006/33**

(51) Int Cl.:
*H04N 5/57* *(2006.01)*

(21) Application number: **05002975.0**

(22) Date of filing: **11.02.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **Harman Becker Automotive Systems
GmbH
76307 Karlsbad (DE)**

(72) Inventors:
• **Saier, Horst
78147 Vöhrenbach (DE)**

• **Sagcob, Thomas
78166 Donaueschingen (DE)**
• **Menzl, Thomas
78048 VS-Villingen (DE)**

(74) Representative: **Grünecker, Kinkeldey,
Stockmair & Schwanhäusser
Anwaltssozietät
Maximilianstrasse 58
80538 München (DE)**

(54) **Brightness controller and method for adjusting the brightness of a video signal**

(57) The present invention relates to a method of controlling the brightness for display of an image or a predefined part of an image included in a video signal. The brightness is controlled and modulated in synchronization with the received video image data without re-calculating and changing individual image data. For this purpose, a reference voltage indicating the maximum brightness for display of the video data is modulated based on a control signal synchronised with the video signal.

Fig. 1

EP 1 691 546 A1

**Description**

The present invention relates to a brightness controller and a method for a adjusting the brightness for display of an analogue video signal on a display device. In particular, the present invention relates to a method of modifying the brightness for display of a video signal comprising a sequence of images without modification of the image data itself.

The brightness for display of video images included in a video data stream is usually encoded in the form of luminance values corresponding to each point of an image to be displayed. In particular for LCD type display devices, any point that can be addressed separately is called a pixel.

The video data of colour images can be encoded in form of RGB data meaning that each of the three basic colours, red, green and blue is encoded separately. Alternatively, colour images are encoded in accordance with the so-called luminance/chrominance scheme or "YUV"-scheme. The video signals of the standard colour television standards NTSC, PAL and SECAM are encoded in form of YUV data.

According to the YUV scheme, a single overall luminance signal ("Y") is transmitted at full bandwidth while two colour difference signals ("U" = R-Y and "V" = B-Y) are transmitted at a reduced bandwidth. In contrast, in accordance with the RGB scheme three separate signals representing the information for each of the three primary colours red, green and blue at full bandwidth are to be transmitted.

For displays driven by analogue video data, the luminance is represented by voltage values, which are sampled in order to display the image point by point. The sampling is accomplished in accordance with horizontal and vertical sync data included in the video signal as well.

The voltage values representing the luminance only take values within a predefined range. The lower limit of this range relates to the minimal possible brightness of a displayed image point and is called "black level". The upper limit of the voltage value range defines the maximum brightness of a displayed image point.

The brightness of the image points reproduced by a display device is not only determined based on the above-described individual brightness data relating to each of the image points. In addition, a value relating to an overall brightness is used during display of video data on a display screen. The overall brightness of a reproduced video signal is adjustable by manually actuating a brightness control button of the display device, in particular of a television set or a computer monitor.

Display devices, which employ a cathode ray tube (CRT), set the overall brightness in accordance with a reference voltage applied to the CRT. The reference voltage is applied to a control gate in order to adjust the fraction of electrons emitted that reach the CRT's display screen.

On the other hand, LCD displays employ a backlight illumination. The overall brightness of LCD displays can be adjusted by changing ("dimming") the level of the backlight illuminating the individual pixels.

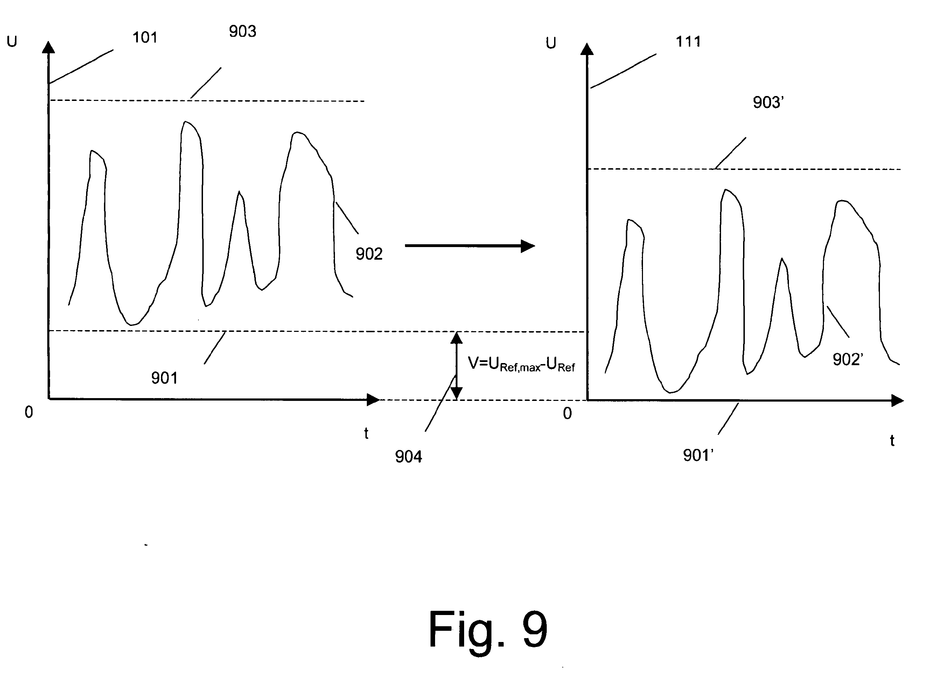

An overall brightness adjustment can be also achieved by uniformly modifying the luminance values of the video signal. This is accomplished by adding/subtracting a predefined DC reference voltage to/from all individual luminance voltage values of an image. Such an additive voltage shifts all luminance values by the same predefined amount, including the black level, i.e. the minimum brightness value for display of the video signal. Due to this shift of the black level, this adjustment procedure is sometimes referred to as "black level adjustment". The principle of the black level adjustment is illustrated in Fig. 9 and will be described in more detail in the detailed description part.

The black level adjustment can be performed at different processing stages of the video signal processing. For instance, the black level can be adjusted before applying the video signal to the display device in an output driving circuit. Alternatively, the black level adjustment can be implemented in a receiving stage of the display device, for instance in a video pre-amplifier.

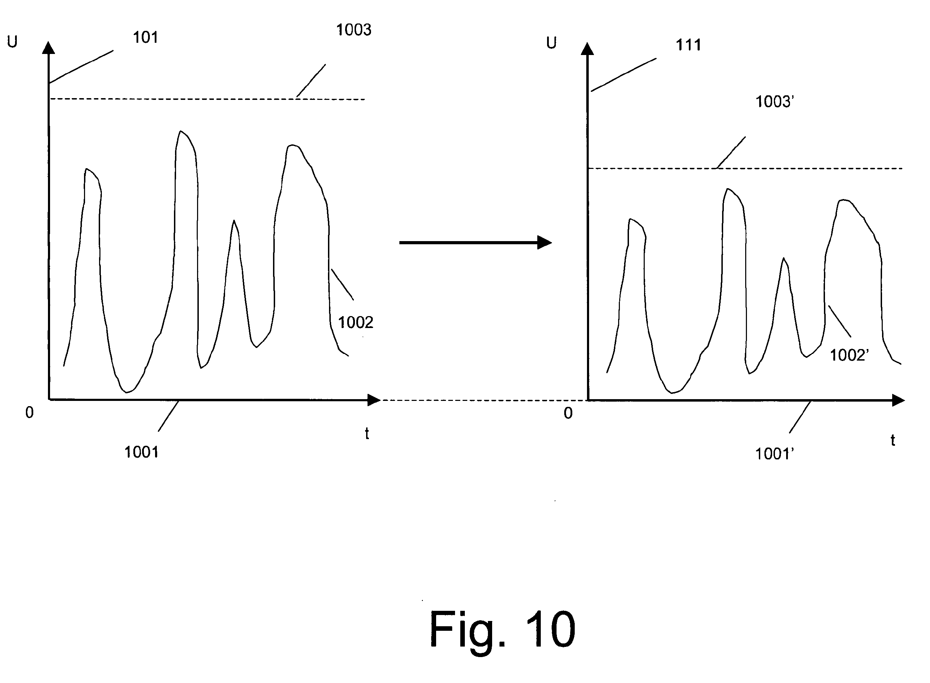

The overall brightness of the video signal is further influenced by the gain of video amplifying means that process the video signal to be displayed. Such an amplification may be applied by a pre-amplifier as mentioned above. In particular, also an attenuation of at least a part of an incoming video image can be achieved by employing a gain value below 1. Details of the video signal attenuation are outlined in the detailed description portion in connection with Fig. 10.

The video signal amplification is defined by the gain $g$ and all luminance voltage values are multiplied by this factor g. Accordingly, this video signal processing does not result in a uniform shift of the overall brightness, but spreads the voltage range by differently shifting the voltage values over the total range. Consequently, the modulation depth of the brightness is increased or decreased within an image. The procedure is therefore often referred to as "contrast adjustment".

Video amplifying circuits are usually controlled by a reference voltage that defines the gain value g. Contrast as well as black level adjustment can be controlled externally by adjusting the reference voltage. For this purpose, a user-actuated button is provided at the device or on a remote control communicating with the device on an RF or infrared basis. The button may, for instance, be implemented in form of a potentiometer or up and down keys.

Both of the above described procedures of brightness adjustment, the black level adjustment and the contrast adjustment, can also be made adaptive to the brightness of the environment of a display by using a brightness detector.

Such a brightness detector determines the brightness of the "front" light at the position of the display device and automatically alters the reference voltage depending on the detection result in order to improve the visibility of the reproduced image.

The present invention aims to provide an improved brightness control method and an improved brightness controller.

This is achieved by the features of the independent claims.

According to a first aspect of the present invention, a method is provided for adjusting the brightness for display of an analogue video signal on a display device. In a receiving step the video signal including a sequence of video images is received. In a modifying step, the voltage values of the video signal are modified in accordance with a reference voltage. The reference voltage defines the maximum brightness for display of the video signal. The reference voltage is modulated in order to alter the brightness of at least a part of an image included in the video signal in accordance with a control signal synchronised with the video signal.

According to a further aspect of the present invention, a brightness controller is provided for adjusting the brightness for display of an analogue video signal including a sequence of video images on a display device. The brightness controller comprises modifying means for modifying the voltage values of the video signal in accordance with a reference voltage. The reference voltage defines the maximum brightness for display of said video signal. The modulating means modulate the reference voltage in order to alter the brightness of at least a part of the image included in the video signal in accordance with a control signal synchronised with the video signal.

It is the particular approach of the present invention to enable a brightness control of a displayed video signal in accordance with control signals. Prior art brightness control procedures only vary the illumination of the video signal display irrespective from the displayed video signal. In contrast, a prior art brightness control taking the individual video signal to be displayed into account requires a complex re-calculation of the video signal. The present invention enables a change of the image brightness in accordance with video control signals such that for example individual images or image positions can be displayed with a particular brightness in a simple manner. For this purpose, the reference voltage controlling the display brightness is modulated in accordance with control signals accompanying the video signal. Such a brightness control is particularly helpful for the display of navigation information and simplifies the configuration of navigation processors considerably. In particular, a re-calculation of the image information for varying the brightness of particular images or image positions is avoided.

For the definition of a predetermined image part, the brightness of which is altered by modulating the reference voltage, the control signal is synchronised with the horizontal and vertical sync data included in the video signal. By using the horizontal and vertical sync information of the video signal, the control signal is enabled to exactly define the position of a predetermined image part the brightness for display of which should be altered.

The control signal preferably defines the position of an image part the brightness of which is to be altered on a pixel basis. Consequently, the brightness for display of at least a single pixel can be modified and the borderlines of larger image areas to be highlighted can be defined with maximum accuracy.

The brightness controller of the present invention is preferably employed as part of a vehicle entertainment and information system comprising a navigation system. Such a vehicle entertainment and information system usually displays map data indicating the current vehicle position. To increase the visibility of the vehicle position to the driver, the brightness around the current position can be increased in a simple and efficient manner by employing the present invention. Conventionally, the current position of a vehicle on the map is indicated by means of a cursor. As such a cursor cannot be quickly recognized by the driver, the visibility of the current position on the map can be improved by increasing the brightness of the image area around the cursor position compared to the remainder of the image.

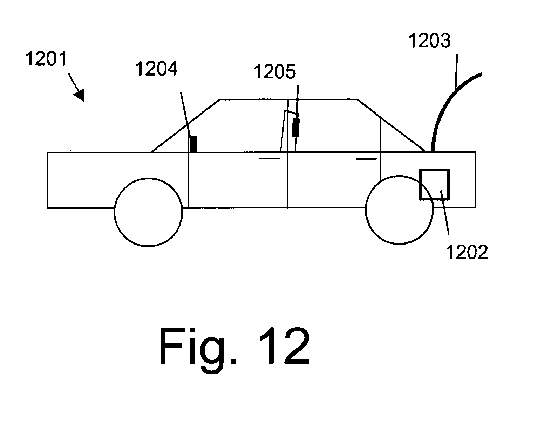

An example configuration of a vehicle entertainment and information system is illustrated in Fig. 12. The shown vehicle entertainment and information system comprises a navigation system 1202, a GPS antenna 1203, and a plurality of display devices 1204, 1205 mounted in vehicle 1201.

However, the present invention is not limited to being used in a vehicle entertainment and information system, which is described only by way of example. A brightness controller according to the present invention may be used in every analogue controlled display devices, such as, for instance, television sets, in particular flat-screen TV's, or computer monitors.

According to a particular embodiment of the present invention, the control signal of the brightness controller only takes vertical sync data of the received video signal into account. The voltage-modulating means of the brightness controller receives the control information for adjusting the reference voltage defining the brightness once per image. Accordingly, the brightness of a sequence of images can be adjusted on an image basis, i.e. increased or decreased image-by-image. It is thus possible to slowly fade in and out certain image contents rather than to abruptly switch between different image contents.

For instance, an image can be displayed in front of a black background by step wisely increasing the brightness of the image frame by frame. In this manner, the image transparency is decreased using a control signal synchronised with the vertical synchronisation information contained in the video data stream. Conventionally, such an effect is achieved by the so-called "alpha-blending", a procedure requiring an additional video data transmission channel for transmitting transparency data.

Such a brightness adjustment which is synchronised with the vertical sync data can be carried out once per image frame, once per image field, or only once after displaying a predetermined number of images, e.g. after three subsequent images or after five subsequent images.

A person skilled in the art is also aware that the brightness control for varying the brightness of complete images, i.e. image by image, can be combined with the brightness control, that varies the brightness only over certain image parts, for instance, at least one pixel having a certain position on the display device.

According to a preferred embodiment of the invention, the modulation of the reference voltage defining the maximum brightness for display of the video signal is achieved by a pulse width modulation. In this embodiment, the reference voltage modulation step converts a duty ratio into the reference voltage. The duty ratio is defined by the control signal. The time dependence of the duty ratio of the control signal is adjusted accordingly, in order to achieve a smooth image-by-image alteration of the brightness and/or a position dependent brightness adjustment of a part of an image.

Preferably, the brightness controller receives as an input a predefined constant voltage $U_0$ and switches this voltage periodically on and off in accordance with the duty ratio d. The duty ratio d indicates the fraction of a time period for switching the voltage on. Most often the duty ratio is given in the form of a percentage. By subsequently RC-filtering the thus obtained periodic sequence of rectangular voltage pulses, every voltage value $U$ between 0 and $U_0$ can be achieved by properly adjusting the duty ratio according to the formula:

$$(1) \qquad\qquad U = D \times U_0$$

By modulating the duty ratio at a rate being slow compared with the period of the voltage pulses a corresponding time modulation of the output voltage U can be achieved, and the brightness for display can be modulated by setting the resulting voltage U as the reference voltage defining the maximum brightness.

According to a preferred embodiment of a brightness controller in accordance with the present invention, the generation of said rectangular voltage pulses is realised by a field programmable gate array (FPGA) controlled by said control signal. As an FPGA is a standard low cost device, a brightness controller of the present invention can be integrated into existing device architecture at limited expenses.

Alternatively, the modulated reference voltage can be generated based on a digital signal value of said control signal by using a standard digital/analogue converter.

Preferably, in a brightness controller according to the present invention, the reference voltage is subtracted from the voltage values of the video signal as received according to the procedure as described above. This leads to a brightness control by black level adjustment.

Alternatively, the modification of the voltage values of the video signal as received is realised in a means for attenuating the video signal that is used in the processing procedure for display of the video signal. Preferably, the reference voltage is set as the voltage defining the attenuation factor of the attenuating means. Thereby, not only the overall brightness can be modified as is the case with the black level adjustment, but the contrast of the image is modulated as well.

Alternatively, a brightness controller according to the present invention can be integrated in a video driver defining a certain range of output voltages of a video signal. Preferably, such an embodiment can be integrated in a graphic controller.

Further embodiments of the present invention are the subject matter of dependent claims.

Additional features and advantages of the present invention will become apparent from the following and more particular description as illustrated in the accompanying drawings, wherein:

Fig. 1      is a flow chart illustrating the modification of a video signal by a reference voltage modulated upon a control signal in accordance with the present invention;

Fig. 2      illustrates a preferred embodiment of the present invention, wherein an image displayed on a display represents a map, and an environment of a cursor indicating a current position on the map is highlighted by increased brightness;

Fig. 3      illustrates in block diagram form a video signal processing apparatus using position information, which is for instance provided by a navigation system, including a brightness controller according to the present invention;

Fig. 4      illustrates the general structure of a video signal and a modulated reference voltage in accordance with the present invention;

Fig. 5 illustrates in detail the structure of a brightness controller according to the present invention;

Fig. 6 represents a sequence of images, wherein an image element appears with a contrast increasing from image to image against the background;

Fig. 7 is a diagram illustrating pulse width modulated sequences of voltage pulses having different duty ratios;

Fig. 8 illustrates in diagrammatic form the operation of an RC filter processing a periodic sequence of unit voltage pulses having a duty ratio d;

Fig. 9 illustrates in diagrammatic form an example of a brightness modulation by employing a black level adjustment with a reference voltage subtracted;

Fig. 10 illustrates in diagrammatic form an example of a brightness modulation performed by attenuating means, the attenuation factor of which is controlled by a modulated reference voltage;

Fig. 11 is a block diagram illustrating a preferred embodiment of the present invention in which RGB image data are adjusted based on a reference voltage obtained by RC-integrating a pulse width modulated sequence of voltage pulses; and

Fig. 12 schematically illustrates the distribution of devices of vehicle entertainment and information equipment including a navigation system within a vehicle.

Illustrative embodiments of the present invention will now be described in reference to the drawings.

The present invention aims to simplify the adjustment of the overall brightness for display of an image or a predefined part thereof without re-calculating the image data. This is achieved by modulating a reference voltage defining the maximum brightness for display of the image on a display device in accordance with a control signal synchronised with the image data. Thus, a time- and memory-consuming re-calculation of image data is avoided. Therefore, brightness control in accordance with the present invention can be easily implemented on a low cost basis in standard video processing systems by using, for instance, simple hardware units such as a pulse width modulator and an RC-integrator.

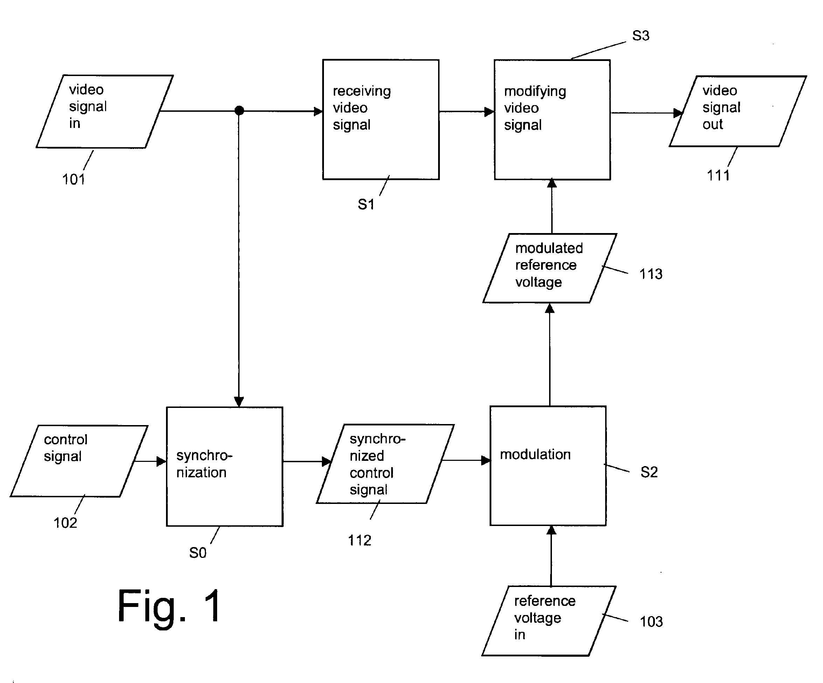

The approach of the present invention is generally by the processing flow illustrated in Fig. 1. Step S1 receives an analogue video signal 101. The video signal 101 includes video image data and a blanking period containing horizontal and vertical sync information. The received video signal is forwarded to video signal modifying step S3.

Video signal modifying step S3 receives as a second input a modulated reference voltage 113. The modulated reference voltage 113 is generated in voltage modulation step S2 from a constant input reference voltage 103. Reference voltage modulation S2 is controlled by a control signal 112 that is received by modulation step S2 as a second input. Control signal 112 has been previously synchronised with the input video signal 101 in synchronization step S0. In order to generate the control signal 112 synchronised with the video signal from an external control signal 102, synchronisation step S0 receives as a second input the necessary synchronization information from the incoming video signal 101.

The control signal 112 may be a digital signal indicating the position of images to be highlighted within an image sequence, or the position and form of image parts to be highlighted within an image. Moreover, the control signal comprises data indicating an amount of overall brightness changes for display of at least predefined image parts. Alternatively, the control signal 112 can be represented by an analogue voltage signal with predefined values, or a combination of digital and analogue data.

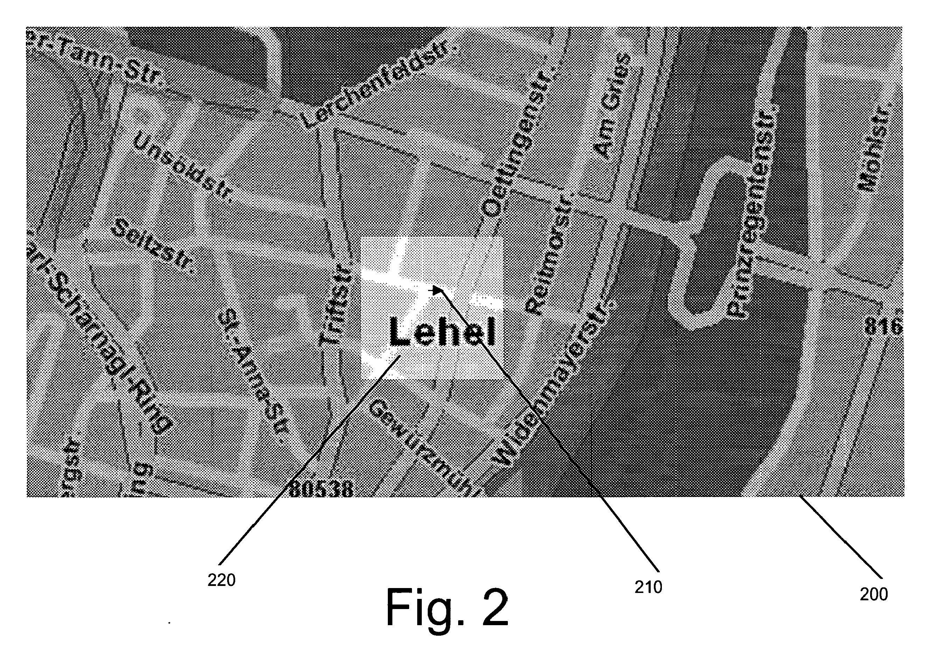

Fig. 2 shows a particular example of a brightness control according to a specific embodiment of the present invention. The figure illustrates a specific example of a video image displayed on a display screen. In this specific example, the video image represents a sector of a navigation map 200.

A typical situation, wherein such map images are displayed on a display arises in a vehicle having a vehicle entertainment and information system including a navigation system. In order to graphically indicate the instructions of the navigation system, a display of the vehicle entertainment and information system which is usually located near the driver's seat displays a section of a map showing the area in which the vehicle currently is located. As can be seen in Fig. 2, the current position 210 of the vehicle is indicated by a cursor on the map. While the vehicle is moving, the position of the cursor on the map is adapted accordingly. If necessary, the displayed section of the map 200 is modified by scrolling. Generally, the cursor indicating the position of the vehicle has the form of an arrow, the arrow head pointing in the direction of movement.

In order to understand the instructions provided by the navigation system, the driver of the vehicle must perceive the position of the cursor. As the driver has to concentrate on the ongoing traffic observation and car handling at the same time, he/she must be able to recognise a cursor's position on the map and the navigation system's instructions very quickly. For not drawing the driver's attention more than necessary to the position recognition, a brightness controller according to the present invention can be used in order to highlight a part of the displayed map 220, in which the vehicle is currently navigating and includes the cursor position 210.

The highlighting of a map area surrounding the current cursor position is achieved by increasing the overall brightness for a predefined area around the cursor position in contrast to the overall brightness of the remainder of the displayed map section. In particular, such an effect can be achieved by decreasing the overall brightness of the incoming video signal of he remainder of the displayed map section while outputting the predefined area around the cursor position to be highlighted with the original brightness. Especially at night, when the overall illumination of the vehicle cab is low, it is much easier to perceive a brightness-modulated part of an image rather than a small cursor. In this manner, the recognition of navigation information can be accelerated and the driving safety increased.

The highlighted environment 220 of the current vehicle position on map 210, as shown in Fig. 2, has the form of a square, which has an increased overall brightness compared to the remainder of the map image. However, a person skilled in the art is aware that the form of an image part to be highlighted in accordance with the present invention is not limited to a quadratic form, but may be of any other form, e.g. rectangular, circular, oval etc.

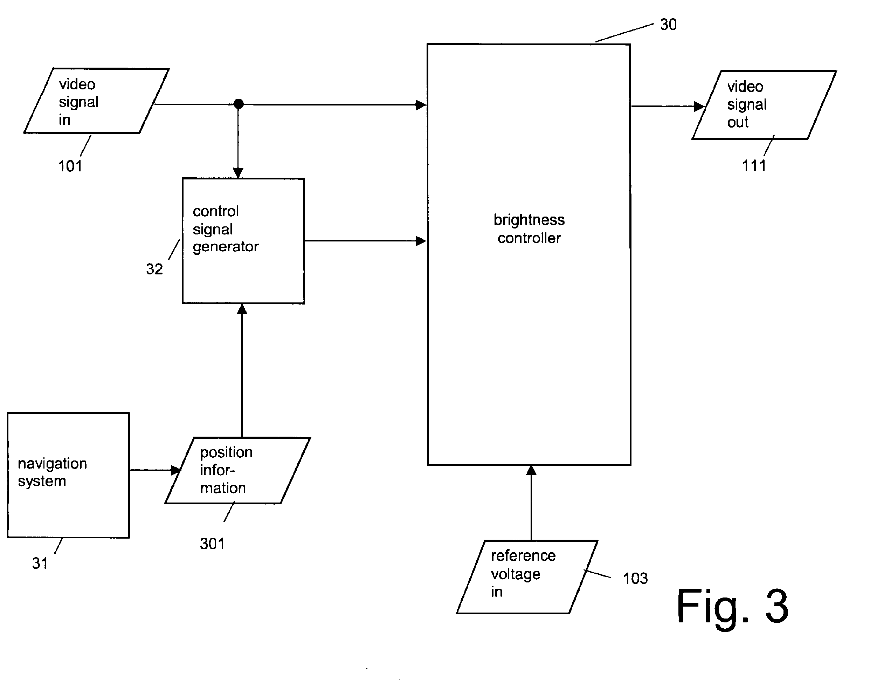

In order to be able to highlight a map area corresponding to the current location of a vehicle, a brightness controller in accordance with the present invention must be provided with the necessary position information. A general scheme illustrating the coordination of brightness adjustment according to the present invention with the position information of the navigation system is illustrated in Fig. 3.

The brightness controller 30 receives the necessary control information in form of a control signal, which is generated by a control signal generator 32. To coordinate the real position of the vehicle with a position on the map, which is to be highlighted on the display, the control signal generator 32 receives the horizontal and vertical sync information of the video signal 101 (as described in connection with Fig. 1) and, in addition, positioning information 301. Said position information 301 is generated by the navigation system 31 on the basis of the position data received by the navigation system 31, for instance via GPS.

The brightness controller 30 modifies the input video signal 101 in accordance with the control signal generated by control signal generator 32 and the input reference voltage 103 as described in connection with Fig. 1. Please note, that a brightness modulated output video signal 111 is thus generated without the necessity of a special processing (i.e. recalculating) of individual image pixels corresponding to the part of the map image to be highlighted.

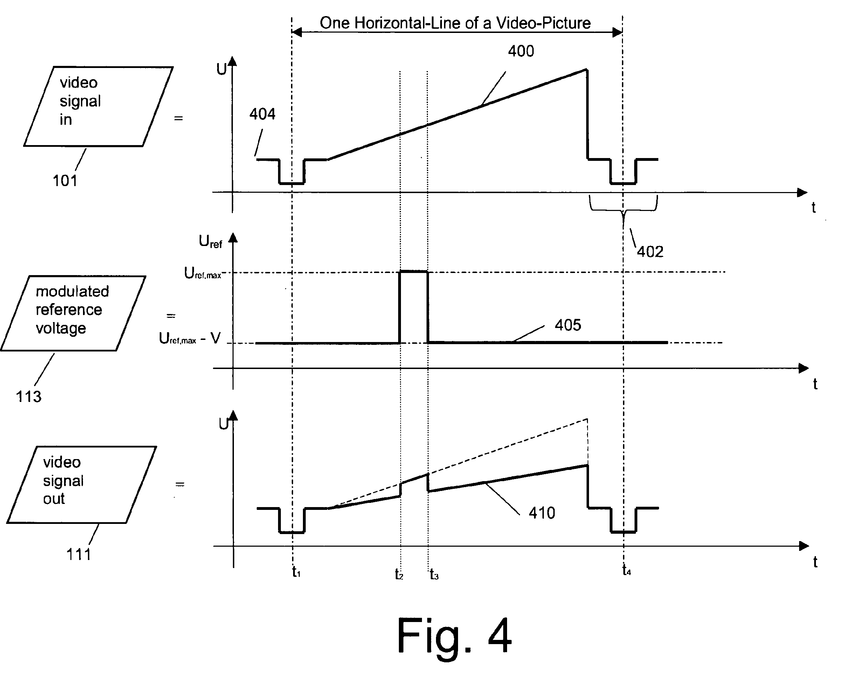

Fig. 4 illustrates in form of voltage-time diagrams the general structure of an incoming analogue video signal 101, a modulated reference voltage 113, and an outgoing video signal 111 in accordance with the present invention. The configuration of the incoming analogue video signal 101 is depicted in the upper portion of Fig. 4. The points of time $t_1$ and $t_4$ marked on the time axis indicate the borders of the part of the video signal corresponding to one horizontal line.

The analogue video signal comprises a sequence of active signal parts 400 and blanking intervals 402. The voltage curve of each active part encodes the luminance of one line of the image. The minimum value of the active part voltage is the "black level" 404. The voltage assumes values lower than the black level during the blanking periods 402.

The diagram in the centre of Fig. 4 illustrates an example of a modulated reference voltage 113 according to a preferred embodiment of the present invention. The default value of the reference voltage in this embodiment is its maximum value, $U_{ref,max}$. This value is assumed in the time interval between $t_2$ and $t_3$ as can be seen from the reference voltage curve 405. In the remaining time period, i.e. before $t_2$ and after $t_3$, the reference voltage is modulated by lowering the voltage value by a certain amount $V$ towards the level $U_{ref,max} - V$. The values of the time boundaries $t_2$ and $t_3$ and the voltage V are defined by the synchronized control signal 112.

The lower diagram of Fig. 4 shows the outgoing video signal 111 influenced by the modulated reference voltage 113. As can be seen from the voltage curve 410, and the dashed curve corresponding to the incoming video voltage curve 400, the voltages of the active part of the video signal remain unchanged only in the time interval between $t_2$ and $t_3$, i.e. the interval, wherein the reference voltage equals the default value $U_{ref,max}$. As can be further seen, from the voltage curve 410, the remaining part of the active line is attenuated by a predetermined factor. The factor can be set in accordance with the control signal 112. The attenuation factor (defining the slope of the active part voltage curve outside the interval ($t_2$, $t_3$)) can be adjusted by varying the potential V defining the degree of lowering the reference voltage

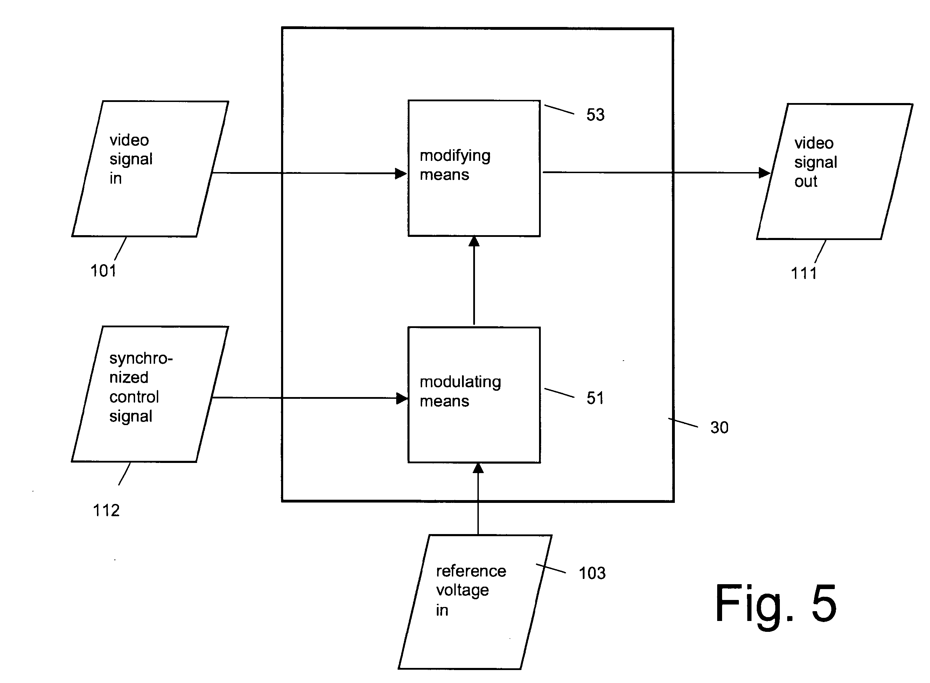

Fig. 5 illustrates in more detail the structure of a brightness controller 30 as described in general in connection with Fig. 3. Basically, the brightness controller 30 comprises modifying means 53 and modulating means 51. While the modifying means 53 serves to modify voltage values of an input video signal 101, the modulating means 51 provides a reference voltage controlling the modification operation of modifying means 53. In accordance therewith, modifying means 53 modifies output video signal 111 by applying the reference voltage, which defines a maximum brightness for display of the video signal. Consequently, a constant input reference voltage 103 is modulated in accordance with control information received in form of a control signal 112 synchronised with the video signal 101.

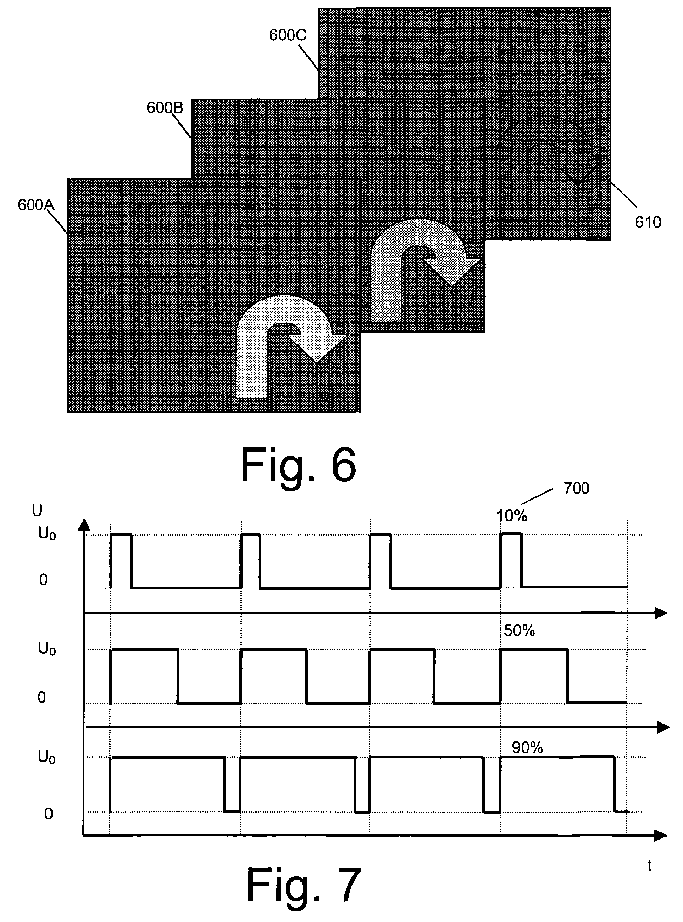

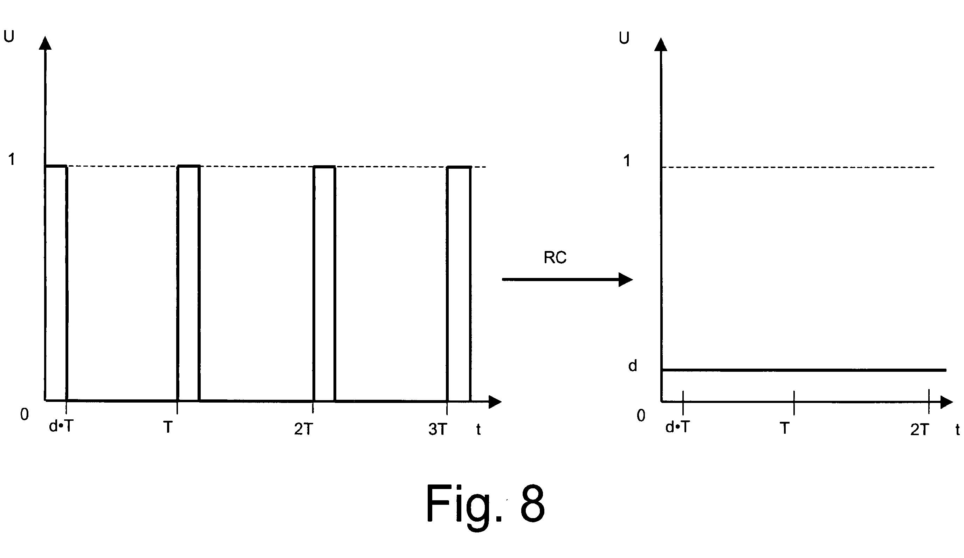

The modulation of the reference voltage will be described below in more detail in connection with Figs. 7 and 8.

Fig. 6 relates to a further embodiment of a brightness controller and control method according to the present invention. The three images 600A, 600B, 600C shown in Fig. 6 are to be displayed subsequently. As can be seen therefrom, the brightness of image element 610 is stepwisely decreased from image to image in order to fade the image element. A person skilled in the art is aware that the scope of the present invention is not limited to fading out certain picture elements, but the brightness controller and the brightness control method according to the invention can be used in the same manner to fade in an image element.

The following figures 7 and 8 relate to pulse width modulation for modulating a reference voltage within a certain range as a particular embodiment of the present invention. By applying pulse width modulation, analogue signal levels are controlled digitally. For this purpose, a constant voltage having a predefined value is switched on and off periodically. The fraction of a complete cycle for which the voltage is switched on is called duty ratio (usually given as a percentage).

Three example sequences of voltage pulses having different duty ratios 700 are illustrated in Fig. 7. The voltage is switched between two voltage levels, namely a high level voltage value $U_0$ and a low level voltage. The low level voltage is assumed to be equal to 0 to simplify the further considerations. The duty ratios 700 underlying the examples shown in Fig. 7 are 10% in the first example, 50% in the second example, and 90% in the third example. When related to Fig. 6, Fig. 7 just shows the part of the control signal, which relates to the arrow. The background in Fig. 6 is not changed, so the control signal for that part of the output picture is in all three cases the same.

In order to convert the value d of the duty ratio into an analogue signal level, a sequence of voltage pulses having the cycle period T and the duty ratio d are integrated with the help of an RC-filter in accordance with the following equation:

$$\frac{1}{T}\int_{T}^{T+d}U(t)dt$$

wherein the voltage function $U\ (t)$ is given by

$$(2)\qquad U(t)=\begin{cases} U_0 & \text{for}\quad kT\le t<(k+d)T \\[2ex] 0 & \text{for}\quad (k+d)T\le(k+1)T \end{cases} \quad k=0,1,2\ldots$$

The result is

$$(3)\qquad \frac{1}{T}\int_{T}^{T+d}U(t)dt\ =U_0$$

By varying the duty ratio d between 0 and 100 %, every voltage value in the range between 0 and $U_0$ can be obtained.

This operation is illustrated in form of a simplified example in Fig. 8. The left hand part of Fig. 8 depicts a sequence of voltage pulses having a cycle period $T$, a duty ratio d and an identical voltage value. The right hand part of Fig. 8 indicates the results of the RC-integration process resulting in a constant voltage. This constant voltage value corresponds to the given duty ratio d. By adjusting the duty ratio d, every voltage value between 0 and 1 can be generated in this manner.

However, it should be noted, that the procedure of generating the modulated reference voltage $U_{ref}$ by pulse width modulation, as described above in connection with Figs. 7 and 8, is only an example. A person skilled in the art is aware, that also any other suitable means can be used, such as, e.g., a digital to analogue converter (DAC) or some or some predefined voltages, which get switched.

An example of how a modulated reference voltage is used as an additive component or defining the voltage values of the output video signal 111 ("black level adjustment") is illustrated in Fig. 9. The left hand diagram represents an input video signal 101. The active part of the input video signal 101 comprises a time dependent voltage curve 902 taking intervals in the range between the black level 901 and the maximum voltage 903. In the diagram on the right hand side, the corresponding portion of an active part of a video signal after having been shifted by the modulated reference voltage value 904 is depicted. As can be seen from the diagram, the black level 901' of the individual video signal voltage values 902' as well as the maximum voltage 903' have been shifted by one and the same value $V = U_{ref,max} - U_{ref}$ of the reference voltage 904. Such a shift corresponds to an overall brightness degradation if the resulting video signal 111 is displayed.

An alternative embodiment wherein the reference voltage defines the attenuation factor of a video attenuating means is now described with reference to Fig. 10. The attenuation factor $g$ is generally defined in analogy to the gain of an amplifier, i.e. as the ratio of a voltage value U' after attenuation related to the corresponding voltage value U before attenuation in accordance with the formula

$$(4) \qquad\qquad g = \frac{U'}{U}$$

In order to avoid any signal distortion, the attenuation factor should be constant over the whole range of voltage values to be processed. In other words, the attenuation characteristic of the attenuation means should be linear or the maximal value of the input signal should be attenuated by the same factor as the minimal value of the input signal.

The left diagram in Fig. 10 fully corresponds to the left hand diagram in Fig. 9. Black level, current voltage values for portion of an active part of a video signal, and the maximal voltage are designated by reference numbers 1001, 1002 and 1003, respectively. The right hand diagram of Fig. 10 illustrates the same portion of a signal after having been processed by a video attenuating means. As can be seen, the multiplication of all voltage values by the same attenuation factor $g$ results in a signal 111 being spread or having a decreased modulation depth as compared to the input signal 101 in the left diagram. In particular, the difference between the upper limits of the voltage range 1003' and the black level 1001' has been decreased compared with the corresponding values of upper limit 1003 and black level 1001 before attenuation.

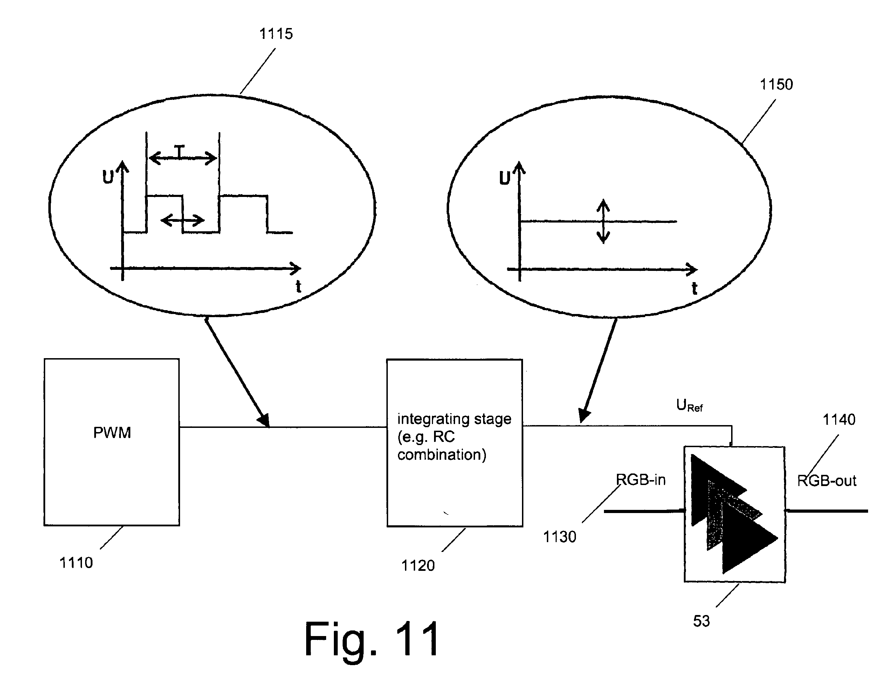

Fig. 11 summarises in a compact manner the general procedure of the brightness control methods according to the present invention as well as a specific embodiment using pulse width modulation. As can be seen from the block diagram, the brightness modifying means 53 obtains a video signal to be output 1140 by applying a reference value $U_{ref}$ to an input video signal 1130. In the particular example, a video signal 1130, 1140 consists of RGB data, R, G, and B standing for the three basic colours, red, green and blue. Please note that in order to modulate the overall brightness of an image in case of RGB-data, the voltages of the three signal channels corresponding to the three colours have to be processed by one and the same reference voltage $U_{ref}$.

The value of this reference voltage, $U_{ref}$ is adjusted by pulse width modulation 1110 and subsequent RC integration 1120. As described above in connection with Figs. 7 and 8, the result 1115 of the pulse width modulation 1110 consists of a periodic sequence of rectangular pulses having a period $T$ and maximum voltage $U_0$. Subsequent RC-integration 1120 results in a voltage 1150 varying slowly compared with T, the value of which is set in accordance with the duty ratio of the pulse width modulation 1110. As illustrated in the figure, the voltage value 1150 obtained after integration is set as the reference voltage $U_{ref}$. However, as mentioned above in connection with Figs. 7 and 8, pulse width modulation is only one example of generating the modulated reference voltage 1150. The essential feature of the present invention is to use a reference voltage 1150, modulated in accordance with a control signal, to alter the brightness for display of at least a part of an image.

In summary, the present invention relates to a method of controlling the brightness for display of an image or a predefined part of an image included in a video signal. The brightness is controlled and modulated in synchronization with the received video image data without re-calculating and changing individual image data. For this purpose, a reference voltage indicating the maximum brightness for display of the video data is modulated based on a control signal synchronised with the video signal.

**Claims**

1. A method for adjusting the brightness for display of an analog video signal on a display device, said video signal including a sequence of video images, the method comprising the steps of:

receiving (S1) a video signal (101); and
modifying (S3) the voltage values (902,1002) of said video signal (101) in accordance with a reference voltage (904), said reference voltage (904) defining a maximum brightness for display of said video signal;

**characterized by** further comprising the step of:

modulating (S2) said reference voltage (103,904) in order to alter the brightness of at least a part (220) of an image included in said video signal (101) in accordance with a control signal (102) synchronized with said video signal (101).

2. A method according to claim 1, wherein said control signal (102) defining a predetermined image part (220), and wherein said step (S2) of modulating said reference voltage (103,904) alters the brightness of said predetermined image part (220).

3. A method according to claim 1 or 2, wherein said control signal (102) being synchronized with the horizontal and vertical sync data of the video signal (101).

4. A method according to claim 2 or 3, wherein said control signal (102) defining the position (210) of at least one pixel.

5. A method according to any of claims 2 to 4, wherein
said analog video signal (101) including image data representing a map (200);
said control signal (102) being generated in accordance with position information indicating a location (210) on said map; and
said predetermined part (220) of the image either including or excluding said location (210) on said map.

6. A method according to claim 1, wherein said control signal (102) being synchronized to the vertical sync data of the video signal (101).

7. A method according to any of claims 1 to 6, wherein said control signal (102) defining a duty ratio (700) and said reference voltage modulation step (S2) converting said duty ratio into said reference voltage (904).

8. A method according to claim 7, wherein said converting step comprises the steps of:

periodically switching on and off (1110) a predefined constant voltage $U_0$ in accordance with said duty ratio d;
obtaining a voltage value U taking values between 0 and $U_0$ in accordance with the formula

$$U = d \times U_0$$

by integrating said periodically switched on and off constant voltage $U_0$ over an RC- combination (1120); and
setting said obtained voltage value (1150) as said reference value (113,904).

9. A method according to any of claims 1 to 6, wherein said reference voltage modulation step (S2) generates the modulated reference voltage (113) based on a digital signal value of said control signal (102).

10. A method according to any of claims 1 to 9, wherein said analog video signal (101,111,1130,1140) includes video data in RGB-format.

11. A method according to any of claims 1 to 10, wherein said modifying step (S3) subtracts said reference voltage (113,904) from the voltage values (902) of said video signal (101) in order to decrease the black level (901,1001) of the video signal (101), said black level (901,1001) indicating the minimum value of the brightness for display of said video signal.

12. A method according to any of claims 1 to 11, wherein said modifying step (S3) is realized in a means for attenuating said video signal.

13. A method according to claim 12, wherein said reference voltage (113) defines the attenuation factor of said attenuating means.

14. A brightness controller for adjusting the brightness for display of an analog video signal on a display device, wherein said video signal (101) including a sequence of video images, said brightness controller comprising modifying means (53) for modifying the voltage values (902,1002) of said video signal (101) in accordance with a reference voltage (904), said reference voltage (904) defining a maximum brightness for display of said video signal (101);
**characterized by**
voltage modulating means (51) for modulating said reference voltage in order to alter the brightness of at least a part (220) of an image included in said video signal (101) in accordance with a control signal (102) being synchronized with said video signal (101).

15. A brightness controller according to claim 14, wherein said control signal (102) defining a predetermined image part (220), and wherein said voltage modulating means (51) altering the brightness of said predetermined image part (220).

16. A brightness controller according to claim 14 or 15, wherein said control signal (102) being synchronized with the horizontal and vertical sync data of the video signal (101).

17. A brightness controller according to claim 15 or 16, wherein said control signal (102) defining the position (210) of at least one pixel.

18. A brightness controller according to claim 14, wherein said control signal (102) being synchronized with the vertical sync data of the video signal (101).

19. A brightness controller according to any of claims 14 to 18, wherein said control signal (102) defining a duty ratio (700) and said voltage modulating means (51) converting said duty ratio (700) into said reference voltage (904).

20. A brightness controller according to claim 19, wherein said voltage modulating means (51) comprises:

voltage pulse generating means (1110) for periodically switching on and off a predefined constant voltage $U_0$ in accordance with said duty ratio d; and
an RC-filter (1120) for obtaining a voltage value U taking values between 0 and $U_0$ in accordance with the formula

$$U = d \times U_0$$

by integrating said periodically switched on and off constant voltage $U_0$ over an RC- combination and setting said obtained voltage value (1150) as said reference value (113,904).

21. A brightness controller according to claim 20 comprising a field programmable gate array for implementing said voltage pulse generating means (1110).

22. A brightness controller according to any of claims 14 to 18, wherein said voltage modulating means (51) being a digital/analog converter.

23. A brightness controller according to any of claims 14 to 22 receiving an analog video signal (101,1130) including video data in RGB-format.

24. A brightness controller according to any of claims 14 to 23, wherein said modifying means (53) subtracting said reference voltage (113,904) from the voltage values (902) of said video signal (101) in order to decrease the black level (901) of the video signal, said black level (901) indicating the minimum value of the brightness for display of said video signal (101).

25. A brightness controller according to any of claims 14 to 24 comprising a means for attenuating said video signal implementing said modifying means (53).

**26.** A brightness controller according to claim 25, wherein said reference voltage (113) defining the attenuation factor of said attenuating means.

**27.** A brightness controller according to any of claims 14 to 26, wherein said modifying means (53) being part of a graphic controller.

**28.** A vehicle entertainment and information device comprising:

a display device (1204,1205) for displaying video images (111); and
a brightness controller in accordance with any of claims 14 to 27 for adjusting
the brightness for display of said video images on said display device.

**29.** A vehicle entertainment and information device according to claim, 28;
further comprising a navigation system (1202,1203);
wherein said display device (1204,1205) being adopted to display a map (200) representing the current navigation area of a vehicle (1201); and
the control signal (102) of said brightness controller being generated in accordance with the vehicle's current position information from the navigation system (1202,1203) for altering the brightness for display of a part (220) of said map (200) either including or excluding the vehicle's current position (210).

Fig. 1

Fig. 2

EP 1 691 546 A1

video
signal
in

101

control
signal
generator

32

navigation
system

31

position
infor-
mation

301

30

brightness
controller

reference
voltage
in

103

video
signal
out

111

# Fig. 3

Fig. 4

One Horizontal-Line of a Video-Picture

video signal in
101

modulated reference voltage
113

video signal out
111

EP 1 691 546 A1

15

Fig. 5

Fig. 6

Fig. 7

Fig. 8

Fig. 9

$V = U_{Ref,max} - U_{Ref}$

Fig. 10

EP 1 691 546 A1

Fig. 11

Fig. 12

EP 1 691 546 A1

**European Patent Office**

**EUROPEAN SEARCH REPORT**

Application Number

EP 05 00 2975

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/025615 A1 (KATO KAZUHITO ET AL) 6 February 2003 (2003-02-06) | 1,2,4,5, 12,14, 15,17, 25,27-29 | H04N5/57 |
| Y | * paragraphs [0005], [0035], [0036], [0040], [0044], [0052] - [0056], [0065]; figures 2,7,12 * | 11,24 | |
| X | EP 1 267 574 A (SAMSUNG ELECTRONICS CO., LTD) 18 December 2002 (2002-12-18) | 1-3,6,7, 9,12, 14-16, 18,19,25 | |
| Y | * paragraphs [0008], [0013], [0014], [0022] - [0026]; figures 1,4 * | 8,10,20, 23 | |
| Y | US 6 288 690 B1 (BYUN HO JIN) 11 September 2001 (2001-09-11) * the whole document * | 8,10,20, 23 | |
| Y | EP 0 512 332 A (THOMSON CONSUMER ELECTRONICS S.A; THOMSON MULTIMEDIA) 11 November 1992 (1992-11-11) * abstract * | 11,24 | TECHNICAL FIELDS SEARCHED (Int.Cl.7) H04N |
| A | PATENT ABSTRACTS OF JAPAN vol. 1996, no. 02, 29 February 1996 (1996-02-29) & JP 07 261731 A (TOPCON CORP), 13 October 1995 (1995-10-13) * abstract * | 1,14 | |

The present search report has been drawn up for all claims

| Place of search | Date of completion of the search | Examiner |
|---|---|---|
| The Hague | 22 July 2005 | Yvonnet, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

**ANNEX TO THE EUROPEAN SEARCH REPORT**
**ON EUROPEAN PATENT APPLICATION NO.**

EP 05 00 2975

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2005

| Patent document cited in search report | | Publication date | Patent family member(s) | | Publication date |
|---|---|---|---|---|---|
| US 2003025615 | A1 | 06-02-2003 | JP | 2002148055 A | 22-05-2002 |
| | | | CN | 1411549 A | 16-04-2003 |
| | | | EP | 1340044 A1 | 03-09-2003 |
| | | | WO | 0240942 A1 | 23-05-2002 |
| EP 1267574 | A | 18-12-2002 | KR | 2002095551 A | 27-12-2002 |
| | | | CN | 1392532 A ,C | 22-01-2003 |
| | | | EP | 1267574 A2 | 18-12-2002 |
| | | | JP | 3591644 B2 | 24-11-2004 |
| | | | JP | 2003005690 A | 08-01-2003 |
| | | | MX | PA01009175 A | 20-08-2003 |
| | | | TW | 511072 B | 21-11-2002 |
| | | | US | 2002191006 A1 | 19-12-2002 |
| US 6288690 | B1 | 11-09-2001 | KR | 207317 B1 | 15-07-1999 |
| EP 0512332 | A | 11-11-1992 | BR | 9201601 A | 15-12-1992 |
| | | | CA | 2065651 A1 | 04-11-1992 |
| | | | CA | 2065651 C | 23-08-1994 |
| | | | CN | 1066550 A ,C | 25-11-1992 |
| | | | DE | 69214713 D1 | 28-11-1996 |
| | | | DE | 69214713 T2 | 13-03-1997 |
| | | | EP | 0512332 A2 | 11-11-1992 |
| | | | ES | 2095979 T3 | 01-03-1997 |
| | | | HU | 63283 A2 | 28-07-1993 |
| | | | IN | 177573 A1 | 08-02-1997 |
| | | | JP | 2929048 B2 | 03-08-1999 |
| | | | JP | 5191741 A | 30-07-1993 |
| | | | KR | 253030 B1 | 15-04-2000 |
| | | | MX | 9202052 A1 | 01-11-1992 |
| | | | PL | 294380 A1 | 08-02-1993 |
| | | | SG | 55050 A1 | 21-12-1998 |
| | | | TR | 26287 A | 15-02-1995 |
| | | | US | 5206728 A | 27-04-1993 |
| JP 07261731 | A | 13-10-1995 | NONE | | |

EPO FORM P0459

For more details about this annex : see Official Journal of the European Patent Office, No. 12/82